# EUROPÄISCHE PATENTANMELDUNG

(11) **EP 2 110 782 A1**
(43) Veröffentlichungstag der Anmeldung: **21.10.2009**
(21) Anmeldenummer: 09158078.7
(22) Anmeldetag: 16.04.2009
(51) Int. Cl.: G06Q 10/00

(54) **Ortungssystem für Einrichtungsgegenstände, insbesondere Hausgeräte in Gebäuden**

(30) Priorität: 17.04.2008 DE 202008005338 U; 12.11.2008 DE 202008015014 U; 13.11.2008 DE 202008015069 U
(71) Anmelder: Aizo AG, 35578 Wetzlar (DE)
(72) Erfinder: Beck, Winfried, 65191 Wiesbaden (DE)
(74) Vertreter: Englaender, Klaus

(57) **Zusammenfassung**

Die Erfindung betrifft ein Ortungssystem zur räumlichen Ortung von Einrichtungsgegenständen eines Gebäudes, wobei dieser Einrichtungsgegenstand mindestens 5einen Ortungssignalgeber umfasst, wobei der Ortungssignalgeber in der Lage ist, mindestens ein Ortungssignal abzugeben und/oder mindestens einen Ortungssignalempfänger umfasst, wobei der Ortungssignalempfänger in der Lage ist, mindestens eines dieser Ortungssignale entgegenzunehmen, wobei Ortungssignalgeber und Ortungssignalempfänger derart zusammenwirken, daß durch dieses Zusammenwirken die räumliche Position des Einrichtungsgegenstands im Gebäude identifizierbar ist.

## Beschreibung

Um Gegenstände, insbesondere Einrichtungsgegenstände in einem Gebäude nicht zu verlieren sind diverse Möglichkeiten erprobt und im Markt eingeführt. Eine Möglichkeit ist die Führung von Inventarlisten, eine andere die Nutzung von IP-Adressen von an ein Netzwerk angeschlossenen elektronischen Geräten.

Werden für Gebäude Gegenstände, insbesondere Einrichtungsgegenstände neu erworben, alte Gegenstände entfernt, oder bestehende Gegenstände, insbesondere Einrichtungsgegenstände umgeräumt, so kann deren Verbleib in Vergessenheit geraten. Will man daher innerhalb eines Gebäudes einen Gegenstand, insbesondere einen Einrichtungsgegenstand und wegen deren Werthaltigkeit und leichten Entfernbarkeit insbesondere einen mit Hilfe von Elektrizität betriebenen Einrichtungsgegenstand nicht verlieren, so bietet der Stand der Technik die Lösung an, mit Hilfe von IP-Adressen diesen elektrisch betriebenen Emrichtungsgegenstand unter Beobachtung zu halten, was jedoch eine Vernetzung voraussetzt.

So lehrt der Stand der Technik in der US 3 805 265 ein Ortungssystem, weiches abgelegene Räume, mobile taschengerechte Einheiten und eine zentrale Konsole zu einem Gesamtortungssystem zusammenfaßt, wobei die Konsole ein Trägersignal für durch die mobile taschengerechte Einheit zu empfangende Identifikationscodes aussendet und zur Auffindung von Personen dient.

Weiterhin lehrt der Stand der Technik in der DE 10 2005 040 069 ein Kommunikationssystem zur Positionsbestimmung umfassend einen Schallsender zum Extrahieren von Sendeinformationen und als zweites separates Gerät eine Positionszuordnungseinheit zum Ableiten einer Positionsinformation anhand der extrahierten Senderinfomlation und zur Lokalisierung von Störungen bzw. Notrufen dient.

Keine dieser Entgegenhaltungen lehrt ein Ortungssystem für Einrichtungsgegenstände, wobei Einrichtungsgegenstände in einem Gebäude bzw. in einem definierten Teil eines Gebäudes, also eines Raums, durch diese Ortung nicht verloren gehen sollen, wobei es letztendlich unerheblich ist, ob sich dieser Raum in einem Gebäude, einem Flugzeug, Schiff, oder einem anderen Objekt befindet, das abgetrennte Räume umfasst. Unter "Raum" ist in Folge daher auch ein abtrennbarer Bürobereich (z.B. Cubicle) zu verstehen.

Unter "nicht verloren gehen sollen" wird im engeren Sinn verstanden, daß ein bereits erkannter Gegenstand bei einer örtlichen Veränderung dieses Gegenstands weiterverfolgt wird, wobei es unerheblich ist, ob er zwischenzeitlich einmal aus dem System verschwindet, beispielsweise durch eine Auslagerung. Unter "nicht verloren gehen sollen" wird im weiteren Sinn verstanden, daß ein noch nicht erkannter Gegenstand erstens ins System eingebucht wird, also erkannt wird und dann bei einer örtlichen Veränderung dieses Gegenstands weiterverfolgt wird, wobei es wiederum unerheblich ist, ob er nach seiner erstmaligen Erkennung zwischenzeitlich einmal aus dem System verschwindet, beispielsweise durch eine Auslagerung.

Es ist Aufgabe der vorliegenden Erfindung eine Lösung bereitzustellen, mit deren Hilfe Gegenstände, insbesondere Einrichtungsgegenstände in einem Gebäude nicht verloren gehen können.

Diese Aufgabe wird durch die Merkmale des unabhängigen Anspruchs gelöst. Vorteilhafte Ausgestaltungen werden durch die Unteransprüche beschrieben.

Insbesondere wird die Aufgabe gelost durch einen Ortungssystem für Einrichtungsgegenstände eines Gebäudes, wobei dieser Einrichtungsgegenstand mindestens einen Ortungssignalgeber umfasst, wobei der Ortungssignalgeber in der Lage ist, mindestens ein Ortungssignal abzugeben und/oder mindestens einen Ortungssignalemfänger umfasst, wobei der Ortungssignalempfänger in der Lage ist, mindestens eines dieser Ortungssignale entgegenzunehmen, wobei Ortungssignalgeber und Oiiungssignalempfänger derart zusammenwirken, daß durch dieses Zusammenwirken die räumliche Position des Einrichtungsgegenstands im Gebäude identifizierbar ist.

Das Ortungssystem für Einrichtungsgegenstände eines Gebäudes ist insbesondere geeignet für Einrichtungsgegenstände, die mit Hilfe von Strom betrieben werden. In diesem Fall kann der Einrichtungsgegenstand selbst das Ortungssystem mit Strom versorgen. Es ist aber auch für Systeme geeignet, die nicht mit Strom betrieben werden. In diesem Fall kann beispielsweise ein derartiger Einrichtungsgegenstand mit einem Signalgeber bestückt werden, der mechanische Energie in elektrische Energie umwandelt und mit deren Hilfe ein Signal erzeugt.

Durch die Verwendung mindestens eines Ortungssignalgebers, der entweder in einem Gebäuderaum angebracht ist, wie z.B. in einer Steckdose und/oder alternativ und/oder ergänzend an dem Einrichtungsgegenstand selbst angebracht ist, z.B. an/in dessen Stecker, kann am Aufstellort selbst durch diesen Ortungssignalgeber ein Ortungssignal abgegeben werden. Unter *"Einrichtungsgeenstäde"* werden vorliegend im engeren Sinne also haushaltsübliche Gegenstände verstanden, die in einem Raum aufgestellt bzw. untergebracht werden können. Unter *"Einrichtungsgegenstäde"* werden vorliegend im weiteren Sinne zusätzlich noch die fest im Raum bzw. mit dem Gebäude verbundenen Vorrichtungen verstanden, wie z.B. UP-Elemente, wie UP-Schalter, Steckdosen, oder eingebaute Regale, Kochzeilen, (Elemente von) begehbaren Wanschränken etc.

Durch die Verwendung mindestens eines Ortungssignalempfängers, der korrespondierend zum Ortungssignalgcber entweder an/in dem Einrichtungsgegenstand selbst angebracht ist, z.B. an/in dessen Stecker, oder der alternativ in einem Gebäuderaum, angebracht ist, wie z.B. an/in einer Steckdose, kann ein im Gebäuderaum abgegebenes Ortungssignal dort wieder empfangen werden. So umfasst eine bevorzugte Ausführungsform mindestens einen Sender und mindestens einen Empfänger in einem jeden Raum.

Vorzugsweise sind die erfindungsgemaßen Systeme derart aufgebaut, dass bei ihnen die Ortungssignalabgabe und Ortungssignalempfang an der selben Stelle von statten gehen, und die räumliche Position des zu ortenden Geräts mit Hilfe von dem Fachmann bekannten Mitteln, wie z.B. Signalverändenmgen ermittelt wird. Hierfür umfassen die Ortungssignalgeber und Ortungssignalempfänger beispielsweise Piezzo-Elemente, die die Eigenschaft aufweisen, sowohl ein Ortungssignal abgeben zu können, als auch ein Ortungssignal empfangen zu können. Die Auswertung dieses Signals kann dann mit Hilfe bekannter Algorithmen erfolgen.

Die zur Ortung notwendige Anzahl von Ortungssignalgebern bzw. Ortungssignalempfängem ist durch den Fachmann anhand der Gegebenheiten vor Ort zu wählen. Bei der entsprechenden Wahl sollte jeder Einrichtungsgegenstand einen einzigen Ortungssignalgeber oder Ortungssignalempfänger, bzw. ein einziges Ortungssignal-Geber-Empfängerelement umfassen. Weiterhin umfasst eine noch bevorzugtere Ausführungsform mindestens einen Sender und mindestens einen Empfänger in einer im Raum zu verortenden einzigen Baueinheit.

Dadurch, dass Ortungssignalgeber und Oitungssignalempfänger derart zusammenwirken, daß durch dieses Zusammenwirken die räumliche Position des Einrichtungsgegenstands im Gebäude identifizierbar ist, wird bewirkt, dass mit Hilfe dieses Ortungssystems für Einrichtungsgegenstände eines Gebäudes die räumliche Position dieses Gegenstands ermittelt werden kann, was den Vorteil hat, dass diese Gegenstände, insbesondere Einrichtungsgegenstände unmittelbar auffindbar sind.

Hierdurch wird insbesondere bewirkt, daß mit Hilfe dieses Ortungssystem für Einrichtungsgegenstände eines Gebäudes der Ort, an dem sich jeder dieser Einrichtungsgegenstände in diesem Gebäude befindet, in seiner räumlichen Lage genau identifizierbar ist. Ist der Heinrichtungsgegenstand z.B. eine Stehlampe, so ist auf diese Weise der Aufstellort dieser Stehlampe im Raum identifizierbar. Dies bedeutet, daß nicht nur er Raum identifizierbar ist, an welchem dieses Gerät sich befindet, sondern darüber hinaus auch noch der genaue Ort in diesem Raum. Eine derartige räumliche Identifizierung könnte daher lauten: *"die Stehlampe befindet sich im* 2. *Obergeschoss im Arbeitszimmer".* Eine derartige räumliche Identifizierung könnte aber, nachdem zuvor ein Referenzpunkt für das Gebäude und/oder die Etage und/oder den betreffenden Raum definiert wurde, auch lauten: *"die Stehlampe* 3 *Meter über,* 2 *Meter links und 1.30 Meter vor* dem *Referenzpunkt".* Die Gestalt der Ausgabe dieser räumlichen Information ist somit unwesentlich, bezogen auf die Kernaussage, die immer eine räumliche Ortsangabe des betreffenden Objekts ausdrückt.

Das erfindungsgemäße Ortungssystem hat somit den Vorteil, dass die räumliche Position eines Einrkhtungsgegenstands ermittelbar ist. Diese Information kann dann in spezifischen Ausgestaltungen der Erfindung genutzt werden. So kann die Erzeugung dieser Information automatisiert werden, um somit einen" Plug and Play"-Charakter für Einrichtungsgegenstände in einem Gebäude zu erzielen.

War bisher z.B. mit Hilfe von IP-Adressen nur der Ort des vernetzten Gegenstands im Netzwerk ermittelbar, so hatte dies den Nachteil, dass bei IP-Adressen die Möglichkeit einer unmittelbaren räumlichen Zuordnung nicht gegeben ist. Außerdem ist man in diesem Fall auf Einrichtungsgegenstände beschränkt, die einen Netzwerkanschluß aufweisen. Auch GPS-basierte Lösungen können keine räumliche Identifikation ermöglichen, da sie nur zweidimensionale und nicht dreidimensionale Daten auszugeben in der Lage sind.

Eine vorteilhafte Ausgestaltung dieses Ortungssystems, wobei das Ortungssystem mindestens eine Signalverarbeitungseinheit und mindestens einen Speicher umfasst bewirkt, dass die Ortungssignale in gesendetem und/oder empfangenem Zustand direkt innerhalb des Ortungssystems z.B. mit Hilfe von Verarbeitungsalgorithmen verarbeitet werden können. Wird hierbei mindestens ein Speicher verwendet, so können dessen Inhalte in die Verarbeitungsalgorithmen einfließen und/oder es können die Ergebnisse der Verarbeitungsalgorithmen in diesem mindestens einen Speicher abgelegt werden. Auf diese Weise sind die Signale und auch durch die Algorithmen ermittelten Recheiiergebnisse historisierbar und es können historische Informationen in die Verarbeitungsalgorithmen mit einfließen.

Wenn sich die mindestens eine Signalverarbeitungseinheit und / oder der mindestens eine Speicher im Ortungssignalsender und / oder im Ortungssignalempfänger befinden, so bewirkt eine derartig angeordnete Signal verarbeitungseinheit, und / oder ein derartiger Speicher und / oder ein derartiger Ortungssignalgeber und/oder ein derartiger Ortungssignalemfänger, der im oder am Einrichtungsgegenstand oder im oder am Stecker der Stromzuruhrleitung zum Einrichtungsgcgenstand angeordnet ist, dass die Ortung bzw. die Verarbeitung der Ortungssignale ohne Zuhilfenahme externer Rechnerkapazitäten erfolgen kann, wodurch sich derart ausgestattete Geräte, insbesondere Einrichtungsgegenstände autonom von zusätzlicher Rechnerkapazität orten lassen können. In diesem Fall können Ortungssysteme aufgebaut werden, die autonom von externen Verarbeitungseinheiten neue Einrichtungsgegenstände orten können. So kann ein derart ausgestaltetes z.B. Bügeleisen beim Einstecken in der Waschküche ebenso erkannt werden, wie beim darauf folgenden Einstecken im Badezimmer. Mit Hilfe des Speichers sind in diesem Fall auch Zusatzinformationen ablegbar, wie z.B. die Zeitpunkte des Hinzufügens, oder Abkoppelns, die Dauern des Angekoppeltseins, die Betriebsdauern innerhalb dieser Zeitdauer und die hierbei verbrauchten Energiemengen, welche fakultativ auch korrespondierenden Preisen, oder Budgets zuordenbar sind. So ist es beispielsweise möglich, ein Budget einer definierten Energiemenge einem Einrichtungsgegenstand an einem definierten Ort z.B. zu einem definierten Preis zuzuordnen.

Eine weitere vorteilhafte Ausgestaltung eines derartigen Ortungssystems, wobei die identifizierte räumliche Position eines Einrichtungsgegenstands mit Hilfe der Signalverarbeitungseinheit einem weiteren Einrichtungsgegenstand zuordenbar ist, bewirkt, dass sich derartig zuordenbare Einrichtungsgegenstände untereinander in eine Beziehung setzen. Ist beispielsweise ein bereits georteter Gegenstand "G" vorhanden, so kann auf diese Weise das Ortungsergebnis eines weiteren Einrichtungsgegenstands dann lauten: *"ich bin in unmittelbarer Nähe zum Gegenstand" "G" soll ich diesem zugeordnet werden?*".

Eine weitere vorteilhafte Ausgestaltung eines derartigen Ortungssystems, wobei die identifizierte räumliche Position mit Hilfe der Signalverarbeitungseinheit von mehr als einem Einriehtungsgegenstand als eine Gruppe von Einrichtungsgegenständen definierbar ist, bewirkt, dass mehr als ein Einrichtungsgegenstand zu einer Gemeinschaft zusammenfaßbar sind, die einer Schicksalsgemeinseihaft gleich, auch gemeinsame Eigenschaften haben können, So kann beispielsweise einer solchen Gruppe ein Energiebudget zugeordnet werden, oder es kann der Verbrauch einer derart definierten Gruppe eigens abgerechnet werden.

Ist beispielsweise ein bereits georteter Gegenstand "G" Teil der Gruppe *"Bad".* so kann auf diese Weise das Ortungsergebnis eines weiteren Einrichtungsgegenstands "E" dann lauten: *"ich bin in unmittelbarer Nähe zur Gruppe "Bad " umfassend den Gegenstand" G", soll ich dieser Gruppe zugeordnet werden?".*

Eine weitere vorteilhafte Ausgestaltung eines derartigen Ortungssystems, wobei mit Hilfe der Signalverarbeitungseinheit die definierte Gruppe von Einrichtungsgegenständen einem definierten Bereich in einem Gebäude und / oder einem einzigen Raum in diesem Gebäude zuordenbar ist, bewirkt, dass Gruppen von erfindungsgemäß ortbaren Einrichtungsgegenständen deckungsgleich sind, mit den örtlichen Gegebenheiten, wie sie z.B. durch Räume, Abtrennungen etc, vorgegeben werden können, So kann auf diese Weise das Ortungsergebnis lauten: *"die Gruppe Einrichtungsgegenstände im Gebäudeteil "Küche" umfasst die Geräte "Ofen. Herd. Kühlschrank, Mixer*..."

Mit Hilfe des Speichers ist die Historie einer derartigen Gruppe nachvollziehbar, sodaß auch im Nachhinein feststellbar ist, welche Einrichtungsgegenstände in welchem Zeitraum von dieser Gruppe umfasst waren.

Derartige Gruppen, z.B. der Gruppe *"Arbeitszimmer"* können so auch Budgets von verbrauchbaren Energiemengen zugeordnet werden, welchen fakultativ auch korrespondierenden Preisen, und/oder Verbrauchszeiträumen zuordenbar sind. So ist es beispielsweise möglich, allen Geräten der Gruppe *"Arbeitszimmer"* einen Monat lang eine definierte Energiemenge im hochpreisigen Zeitraum von 9-17:00 Uhr zuzuweisen. Dieses Budget, oder der tatsächliche Verbrauch im Arbeitszimmer kann dann bei einem Arbeitnehmer beispielsweise in den Steuerunterlagen als Betriebsausgabe als eigener Posten zur Geltung gebracht werden.

Eine weitere vorteilhafte Ausgestaltung eines derartigen Ortungssystems, wobei sich die definierte Gruppe von Einrichtungsgegenständen in einem einzigen Raum befindet, weil das Ortungssignal ein Signal ist, welchem die Eigenschaft fehlt, Gebäudewände zu durchdringen, bewirkt, dass mit Hilfe der Wahl des Charakters des Ortungssignals eine räumliche Festlegung bewirkt wird, So wird ein Fachmann ein Signal wählen, welches die Eigenschaft aufweist, die in diesem Raum gerade vorhandenen Wände nicht durchdringen zu können. In diesem Fall wird er dieses Signal auch vor dem Hintergrund auswählen, dass diese Wände unterschiedliche Eigenheiten, wie Dicken, Materialen, Armierungen etc. aufweisen. Der Fachmann wir diese Eigenheiten beriicksichtigen und abhängig hiervon für jeden Raum die Eigenschaften des Ortungssignals derart festlegen, dass das Ortungssignal die Wände dieses Raums gerade nicht zu durchdringen in der Lage ist, um auf diese Weise zu bewirken, dass das Ortungssignal dieses Raums ausschließlich zur Ortung von Einrichtungsgegenständen in diesem Raum dient.

Dies wird insbesondere dadurch bewirkt, dass das Ortungssignal ein Signal aus dem Ultraschallbereich und/oder aus dem Infrarotbereich ist. Kombiniert man diese mit Signalen, die durch die menschlichen Sinne wahrnehmbar sind, so bewirkt dies, dass die Ortungsroutine durch den Bediener selbst mitverfolgt werden kann.

Eine weitere vorteilhafte Ausgestaltung eines derartigen Ortungssystems, wobei ein erster Einrichtungsgegenstand einem Gebäudeteil zugeordnet ist, und dieser erste Einrichtungsgegenstand dem mindestens einen weiteren Einrichtungsgegenstand als Referenz für das Ortungssignal dient bewirkt, dass sich derartig ortbare Einrichtungsgegenstände, insbesondere elektrisch betriebene Einrichtungsgegenstände gegenseitig orten und sich gegenseitig als Referenz verwenden. Ist beispielsweise ein bereits georteter Gegenstand "G" z.B. Teil der Gruppe *"Küche*", so kann auf diese Weise das Ortungsergebnis lauten: "*ich werde nun der selben Gruppe zugeordnet*, *in welcher sich Gegenstand" G" befindent",* also Teil der Küchengruppe.

Eine weitere vorteilhafte Ausgestaltung eines derartigen Ortungssystems, wobei die Ortung per Triangulation erfolgt, bewirkt, dass bei der Ortung von Einrichtungsgegenständen auf die Erfahrungen zurückgegriffen werden kann, die in anderen Fachgebieten mit der Triangulation bisher gesammelt wurden. So kann auf diese Weise die Ortungsgenauigkeit bis auf wenige Zentimeter präzisiert werden, wenn beispielsweise mehr als ein Ortungssignal zur Ortung zur Verfügung stehen. Dies ist insbesondere für die Ortung kleiner Gegenstände von Vorteil.

Eine weitere vorteilhafte Anwendung kann dieses erfindungsgemäße Ortungssystem daher bei der Ortung von z.B. Akten finden.

Eine weitere vorteilhafte Ausgestaltung eines derartigen Ortungssystems gemäß einem der zuvor genannten Ansprüche, wobei Ortungssignalgeber und Ortungssignalempfänger darüber hinaus derart zusammenwirken, daß durch dieses Zusammenwirken die Proportionen und / oder Volumina und / oder Massen des Raums und / oder des Einrichtungsgegenstands identifizierbar ist/sind, bewirkt, dass nicht nur die örtliche Position im Raum identifizierbar ist, sondern auch die räumliche Ausdehnung und Gestalt sowohl des Raums und/oder des jeweiligen Eintichtungsgegenstands. Der Stand der Technik stellt hierfür Ortungssignale zur Verfügung, welche geeignet sind, z.B. für Hologramme dreidimensionale Abbildungen eines Körpers zu erzeugen. Werden diese im erfindungsgemäßen System zum Einsatz gebracht, so ist es möglich, nicht nur die Lage des Einrichtungsgegenstands im Raum zu identifizieren, sondem diesen auch visuell auf einer Ausgabevorrichtung zu repräsentieren.

Die Aufgabe wird ebenfalls gelöst durch einen Kaltgerätestecker, umfassend ein erfindungsgemäßes Ortungssystem, bzw. Teile hiervon. Hierdurch wird bewirkt, dass das erfindungsgemäße Ortungssystem bzw. Teile davon durch Einbau in einen normgemäßen Kaltgerätestecker auch strombetriebenen Einrichtungsgegenständen zur Verfügung gestellt werden kann, die ursprünglich nicht mit einem derartigen Ortungssystem oder Teilen davon ausgestattet waren, beispielsweise, weil sie alt sind, oder weil sie so sparsam kalkuliert wurden, dass für das erfindungsgemäße Ortungssystem, oder für Teile dayon kein Budget vorhanden war.

Ein derartiger erfindungsgemäßer Kaltgerätestecker kann dann entweder an der Kabelpeitsche des betreffenden Geräts unmittelbar angeschlossen werden, oder er kann in Gestalt eines Zweischensteckers mit dem eigentlichen Stecker des betreffenden Einrichtungsgegenstands verbunden werden.

So kann beispielsweise eine alte Kaffeemaschine mit einem derartigen erfindungsgemäßen Kaltgerätestecker ausgestattet werden. Wird die derart ausgestattete Kaffeemaschine z.B. in der Küche ausgesteckt, so meldet das erfindungsgemäße Ortungssystem diese aus der Gruppe der *"Küchengeräte"* ab und wird diese Kaffeemaschine dann z.B. im Arbeitszimmer wieder angesteckt, so meldet sie sich in der Gruppe "*Arbeitszimmer"* wider an.

Die Aufgabe wird darüber hinaus ebenfalls gelöst durch einen Einrichtungsgegenstand, umfassend ein erfindungsgemäßes Ortungssystem, bzw. Teile hiervon. Hierdurch wird bewirkt, dass das erfindungsgemäße Ortungssystem bzw. Teile davon durch Einbau in den Einrichtungsgegensand selbst, diesem Einrichtungsgegenstand mit dessen Funktionen zur Verfügung gestellt werden kann.

Wenn ein Einrichtungsgegenstand, beispielsweise eine Stehlampe bereits mit einem derartigen erfindungsgemäßen Ortungssystem ausgestattet ist, bzw. mit Teilen davon, so ist es möglich, beispielsweise durch Einstecken in die Stromversorgung zu bewirken, dass der neue Ort dieses Einrichtungsgegenstand identifizierbar ist. Im Fall, dass dieser Einrichtungsgegenstand in einem Raum eingesteckt wird, beispielsweise dem Wohnzimmer, in dem bereits mindestens ein anderer Einrichtungsgegenstand, beispielsweise die HiFi-Anlage, Teil der mit dem räumlichen Bereich des Wohnzimmers identische Gruppe "*Wohnzimmergeräte*" ist, wird sich diese Stehlampe mit Hilfe des erfindungsgemäßen Ortungssystems automatisch in die bereits bestehende Gruppe der Wohnzimmergeräte eingliedern können, wenn mindestens ein anderer Einrichtungsgegenstand als korrespondierender Einrichtungsgegenstand zur Verfügung steht.

Der Vorteil eines derartigen erfindungsgemäß ausgestatteten Einrichtungsgegenstands, bzw. Kaltgerätesteckers insbesondere im Fall, dass der Einrichtungsgegenstand ein Hausgerät ist, ist, daß in Smart-Home-Systemen die Anmeldung von zusätzlichen Geräten und die Abmeldung von abgekoppelten Geräten automatisch erfolgen kann und nicht mehr mit Hilfe eines eigenen Eintragungsakts durch einen Bediener z.B. mit Hilfe einer Software durch einen Laptop erfolgen muß. Darüber hinaus ist durch ein solches erfindungsgemäßes System der Mensch als Fehlerquelle für Eintragungen ausgeschlossen.

Die Aufgabe wird ebenfalls gelöst durch eine Datenbank, umfassend Daten, die die räumliche Position eines Einrichtungsgegenstands im Gebäude gemäß einem der zuvor genannten Ansprüche mit Hilfe eines Ortungssystems identifiziert und /oder beschickt und / oder aktualisiert wird. Eine derartige Datenbank, beschickt durch Daten, die durch das erfindungsgemäße Ortungssystem gewonnen wurden, bzw. eine Datenbank, in der Daten, die aus dem erfindungsgemäßen Ortungssystem stammen, niedergelegt wurden, bewirkt, dass diese Daten mit Hilfe der Datenbank beispielsweise Erfassungs- und/oder Abrechnungsalgorithmen zur Verfügung gestellt werden können.

Auf diese Weise kann beispielsweise ein Facility Management System, umfassend ein erfindungsgemäßes Ortungssystem bewirken:

Ortungssystem für Einrichtungsgegenstände, insbesondere Hausgeräte in Gebäuden, dass das mit Hilfe des erfindungsgemäßen Ortungssystems z.B. Einrichtungsgegenstände lokal geortet werden können; dass diese Daten z.B. in eine Datenbank eingeordnet werden; dass diese Datenbank beispielsweise Teil eines Facility-Management-Systems ist und mit Hilfe von Algorithmen für eine jede räumliche Gruppe eine eigene Abrechnung, z.B. der Energiekosten, oder, im Fall, dass die räumliche Position des Einrichtungsgegenstands im Gebäude gemäß einem der zuvor genannten Ansprüche ortbar ist und dieser Ort in das Facility Management System einordenbar ist eine eigene Abrechnung von z.B. in der Gruppe integrierten Mietgeräten erstellt.

Im Fall, dass z.B. eine Gruppe an Räumen durch das Facility-Management-System zu einer Wohnung zusammengefasst wird, ist es beispielsweise möglich, wenn der in das Facility Management System einordenbare Ort des Einrichtungsgegenstands im Gebäude im Facility Management System einer Verwaltungseinheit zuordenbar ist, wodurch Kosten der Wohnung unmittelbar abgerechnet werden können und wodurch in dieser Abrechnung die Kosten von Leih- und/der Mietgeräten aufgeschlüsselt und ausgegeben werden können.

Auch wird die Aufgabe gelöst durch ein Ortungssystem für Gegenstände in einem Gebäude, wobei dieser Gegenstand mindestens einen Ortungssignalgeber umfasst, wobei der Ortungssignalgeber in der Lage ist, mindestens ein Ortungssignal abzugeben und/oder mindestens einen Ortungssignalempfänger umfasst, wobei der Ortungssignalempfänger in der Lage ist, mindestens eines dieser Ortungssignale entgegenzunehmen, wobei Ortungssignalgeber und Ortungssignalempfänger derart zusammenwirken, daß durch dieses Zusammenwirken die räumliche Position des Gegenstand im Gebäude identifizierbar ist.

Im Fall, dass der Ortungssignalgeber und / oder der Ortungssignalempfänger keine Verbindung zu einer Stromquelle aufweist, und im Fall, dass der Ortungssignalgeber und / oder der Ortungssignalempfänger mit einem Element verbunden sind, welches selbst die zum Betrieb der Ortungssignalgeber und / oder der Ortungssignalempfänger notwendige Spannung zur Erzeugung eines Ortungssignals hervorzubringen in der Lage ist, beispielsweise durch Piezo-Elemente, ist es möglich das erfindungsgemäße Ortungssystem auch dann anzuwenden, wenn ein Gegenstand nicht mit Hilfe der bei Haushaltsgeräten bzw. Einrichtungsgegenständen üblichen Stromversorgung versorgt ist. In diesem Fall kann z.B. ein Piezo-Element, das auf einem Gegenstand angebracht ist, das z.B. wandundurchlässige Ortungssignal erzeugen, welches vom Ortungssignalempfänger aufgenommen wird und dadurch eine örtliche Lokalisierung des Gegenstands erlaubt, ohne dass ein Bediener diesen Gegenstand z.B. von Hand eingeben muß.

Eine Ausgestaltungsform dieser Lösung liegt darin, daß die Gegenstände in einem Gebäude Einrichtungsgegenstände, insbesondere Haushaltseinrichtungsgegenstände im oben definierten engeren und / oder weiteren Sinne sind.

Besonders hilfreich ist dieses System, wenn wobei der Gegenstand mindestens ein Schlüssel und/oder mindestens eine Akte, und/oder mindestens ein Haustier ist.

Die erfindungsgemäße Aufgabe wird auch durch ein Verfahren gelöst, umfassend ein erfindungsgemäßes Ortungssystem, bei weichem in einem ersten Schritt das Ortungssignal abgegeben wird, dieses Ortungssignal in einem zweiten Schritt von einem Ortungssignalempfänger empfangen wird und in einem dritten Schritt die räumliche Lage des Ortungssignalgebers ermittelt wird.

Darüber hinaus kann nach Ermittlung der räumlichen Lage die Einbindung eines Einrichtungsgegenstands in eine bestehende Gruppe von Einrichtungsgegenständen erfolgen. Diese Einbindung kann dadurch erfolgen, dass mit Aussenden des Ortungssignals die betreffende Gruppe von Einrichtungsgegenständen sich zur Aufnahme eines weiteren Einrichtungsgegenstands durch Wahrnehmung des Ortungssignals öffnet, diesen Einrichtungsgegenstand aufnimmt und dass nach der erfolgten Aufnahme sich diese Einrichtungsgruppe wieder schließt Die Öffnung und/oder das Schließen der Gruppe von Einrichtungsgegenständen kann ergänzend auch durch Signale angezeigt werden, die durch die menschlichen Sinne wahrnehmbar sind. Dies hat den Vorteil, dass der Bediener den Einbindungsvorgang verfolgen kann.

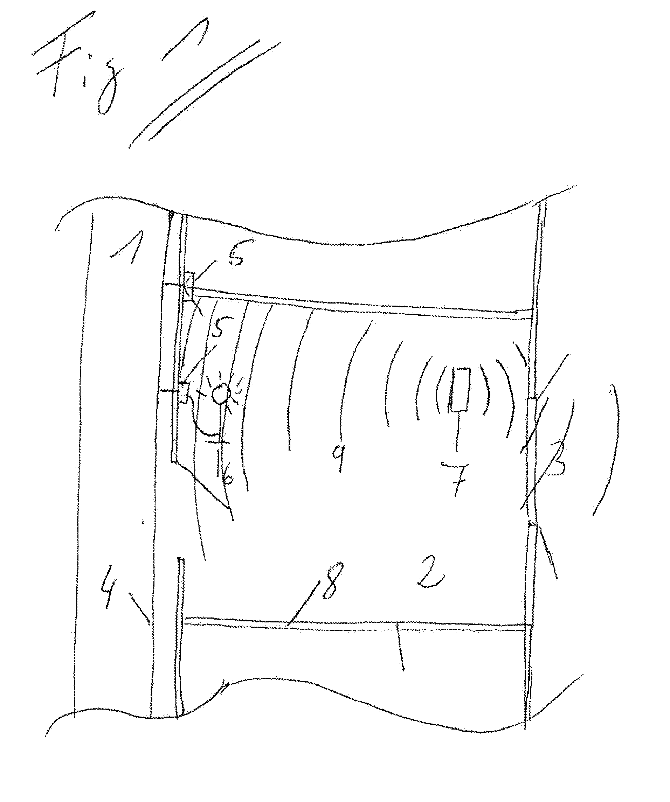

Weitere Ausgestaltungsformen werden durch Fig. 1 dargestellt. Hierbei zeigt
Fig. 1 ein erfinduiigsgemäßes Ortungssystem beim Einsatz in einem Raum, der keinen eigenen Stromkreis aufweist.

Fig. 1 stellt schematisch die beispielhafte Möglichkeit der erfindungsgemäßen Einbindung eines Einrichtungsgegenstands, vorliegend eines Arbeitsmittels in Gestalt eines Diktiergeräts 7, dar. Ein Diktiergerät 7 ist ein hochpreisiges elektrisches Gerät, welches durch eine Batterie betrieben, oder zum Betrieb an die Stromversorgung angeschlossen werden kann. Darüber hinaus ist es klein und damit leicht verlierbar und es ist mobil und damit in diversen Räumen verwendbar.

Fig. 1 ist zu entnehmen, dass im Bereich des Flurs 1 eine Stromleitung 4 verläuft, welche diverse Steckdosen 5, auch des Raums 2, mit Strom versorgt. Der Raum 2 weist darüber hinaus noch ein geöffnetes Fenster 3 auf. Der Raum 2 verfügt nicht über einen eigenen Stromkreis, was für elektrische Gebäudeinstallationen, insbesondere für Smart-Home-Systeme mindestens hilfreich, oftmals aber auch Voraussetzung für die Installation eines derartigen Systems ist. Insbesondere im Altbaubestand sind jedoch diese Gegebenheiten nicht immer erfüllt, bzw. ohne aufwendigen Umbau gar nicht erfüllbar. Die elektrische Installation, also die im Gebäude vorhandenen Stromkreise sind daher insbesondere im Altbaubestand oft unabhängig von den räumlichen Gegebenheiten vor Ort.

Durch die in der in Fig. 1 dargestellte Anordnung kann die Anschlußlogik der anzuschließenden Geräte und die Bildung von Gerätegruppen unabhängig von der physischen Verdrahtung organisieren werden. Es kann so zu sagen ein "*virtuelle Stromkreis*" erstellt werden, in welchem vorliegend die Gerätegruppe des Raums 2 (Lampe 6 und Diktiergerät 7) in einer Gruppe zusammengefasst sind. Diese Gerätegruppe kann auf die erfindungsgemäße Weise deckungsgleich zur räumlichen Abgrenzung des Raums 2 gestaltet werden, indem ein Ortungssignal 9 Verwendung findet, welches Wände 8 nicht durchdringen kann.

Eine bewährte Möglichkeit ein solches Ortungssignal 9 zu erzeugen ist, Chips, welche in/an den Einrichtungsgegenständen angebracht werden, beispielsweise mit einem Piezo-Kristall auszustatten, wobei das Piezo-Kristall sowohl als ein Lautsprecher, oder als ein Mikrophon wirken kann.

Wenn nun ein zusätzlicher Einrichtungsgegenstand, vorliegend in Gestalt eines Arbeitsgerätes, wie dem Diktiergerät 7, beispielsweise durch Anstecken an eine Steckdose 5 im Raum 2 angeschlossen wird, so wird dieses ein Ortungssmnsignal in Gestalt eines Tons aussenden, welches von dem/den bereits installierten Geräte/n im Raum 2 mit Hilfe dessen Piezo-Elements empfangen wird. Wird dieses Ortungssignal von den zwei erfindungsgemäß ausgestatteten Einrichtungsgegenständen, vorliegend der Lampe 2 und der Steckdose 5, wahrgenommen, so kann mit Hilfe der Laufzeitunterschiede und entsprechenden Algorithmen die räumliche Lage des Diktiergeräts 7 identifiziert werden. Auf diese Weise kann dann der neue Einrichtungsgegenstand (Diktiergerät 7) in der Gruppe der alten Geräte (Lampe 6, Steckdose 5) automatisch zugeordnet werden, ohne dass ein Bediener diese Zuordnung eigens bewerkstelligen muß.

Vorteilhaft ist es, eine Quittierung, beispielsweise durch eine charakteristische Signalfolge, wie durch ein charakteristisches akustisches Signal und/oder ein charakteristisches optisches Signal, z.B. ein Blinken der Lampe 6 zu Erkennen zu geben, dass der Einbindungsvorgang erfolgreich war.

Eine beispielhafte Einbindungsroutine könnte somit wie folgt gestaltet werden: Anmeldung des einzubindenden Einrichtungsgegenstands durch Abgabe eines Ortungssignals 9, Öffnung der Gruppe von Einrichtungsgegenständen durch die Freigabe der erbetenen Anmeldung,

Einbinden des neuen Einrichtungsgegcnstands in die Gruppe. Die Anmeldung des neuen Einrichtungsgegenstands durch das Ortungssignal 9 kann dadurch erfolgen, dass die bereits bekannten Elemente der Gruppe auf Empfangsbereitschaft schalten, den Empfang quittieren und das neue Gerät auf diese Weise integrieren.

Auf diese Weise ist weder die Führung von Bestandslisten notwendig, in welchen Umtragungen durch einen Bediener eigens vorgenommen werden müssen, die jedoch praktisch nie aktuell waren und es ja auch gar nicht sein können, da der Bediener erst die Meldung einer Um tragung erhalten muß.

Die präzise Position des Diktiergeräts 7 kann bis auf wenige Zentimeter genau mit Hilfe von beispielsweise Triangulation, also der Errechnung aus Laufzeitunterschieden erfolgen. Auf diese Weise ist nicht nur der Raum 2 identifizierbar, Weise kann das erfindungsgemäße System als Suchsystem Verwendung finden, indem z.B. von der Lampe 6 und Steckdose 5 je ein Ortungssignal 9 ausgesandt wird, dies durch das noch nicht eingebundene Diktiergerät 7 reflektiert wird und über die sich hierbei ergebenden Laufzeitunterschiede die genaue Lage des Diktiergeräts 7 ermittelt wird.

Auch können auf diese Weise Beamer, Kopierer, Aktenordner etc. nicht nur räumlich, sondern auch innerhalb eines Raums 2 bis auf wenige Zentimeter vor oder nach einer Einbindung in eine Gruppe geortet werden. Diese Daten können dann in Verwaltungssysteme eingespeist werden.

Durch den Einsatz von derartigen Chips kann darüber hinaus auch bewirkt werden, daß durch die Erzeugung von beispielsweise Ultraschall entsprechend ausgestattete Elemente untereinander kommunizieren und mit Hilfe einer Identifikationsroutine erkennen, dass sie sich im selben Raum 2 befinden, also dass die Lampe 6 und die Steckdose 5 erkennen, dass sich das gesuchte Diktiergerät 7 in ihrer unmittelbaren Nähe befindet.

Die Begrenzung auf den Raum 2 wird vorteilhafterweise dadurch bewirkt, dass ein Ortungssignal Verwendung findet, welches Wände 8 nicht durchdringen kann. Vorteilhaft ist es weiterhin, zumindest einen Teil dieses Ortungssignals 9 auch im hörbaren Bereich anzusiedeln, damit der Bediener das sich vollziehende Erkennungs- und Einbindungssignal mitverfolgen kann. Alternativ oder ergänzend wäre auch ein Infrarotsignal möglich.

Mit Hilfe entsprechender Algorithmen kann auch durch Kreuzpeilung beispielsweise kann die genaue Lage dieses gesuchten Geräts bis auf wenige Zentimeter genau identifiziert werden und dann in einer in Fig. 1 nicht dargestellten Anzeigevorrichtung angezeigt werden.

### Bezugszeichenliste:

- 1.: Flur
- 2.: Raum eines Gebäudes
- 3.: Fenster
- 4.: Stromleitung
- 5.: Steckdosen
- 6.: Lampe
- 7.: Diktiergerät
- 8.: Wand
- 9.: Ortungssignal

## Patentansprüche

1. Ortungssystem für Einrichtungsgegenstände eines Gebäudes, wobei dieser Einrichtungsgegenstand mindestens einen Ortungssignalgeber umfasst, wobei der Ortungssignalgeber in der Lage ist, mindestens ein Ortungssignal abzugeben und/oder mindestens einen Ortungssignalempfänger umfasst, wobei der Ortungssignalempfänger in der Lage ist, mindestens eines dieser Ortungssignale entgegenzunehmen, wobei Ortungssignalgeber und Ortungssignalempfänger derart zusammenwirken, daß durch dieses Zusammenwirken die räumliche Position des Einrichtungsgegenstands im Gebäude identifizierbar ist.

2. Ortungssystem nach Anspruch 1, wobei das Ortungssystem mindestens eine Signalverarbeitungseinheit und mindestens einen Speicher umfasst.

3. Ortungssystem gemäß einem der zuvor genannten Ansprüche, wobei die Signalverarbeitungseinheit und / oder der Speicher und / oder Ortungssignalgeber und/oder Ortungssignalempfänger im oder am Einrichtungsgegenstand oder im oder am Stecker der Stromzufuhrleitung zum Einrichtungsgegenstand angeordnet ist.

4. Ortungssystem gemäß einem der zuvor genannten Ansprüche, wobei die identifizierte räumliche Position eines Einrichtungsgegenstands mit Hilfe der Signalverarbeitungseinheit einem weiteren Einrichtungsgegenstand zuordenbar ist.

5. Ortungssystem gemäß einem der zuvor genannten Ansprüche, wobei die identifizierte räumliche Position mit Hilfe der Signalverarbeitungseinheit von mehr als einem Einrichtungsgegenstand als eine Gruppe von Einrichtungsgegenständen definierbar ist.

6. Ortungssystem gemäß einem der zuvor genannten Ansprüche, wobei mit Hilfe der Signalverarbeitungseinheit die definierte Gruppe von Einrichtungsgegenständen einem definierten Bereich in einem Gebäude und / oder einem einzigen Raum in diesem Gebäude zuordenbar ist.

7. Ortungssystem gemäß einem der zuvor genannten Ansprüche, wobei ein erster Einrichtungsgegenstand einem Gebäudeteil zugeordnet ist, und dieser erste Einrichtungsgegensstand dem mindestens einen weiteren Einrichtungsgegenstand als Referenz für das Ortungssignal dient.

8. Ortungssystem gemäß einem der zuvor genannten Ansprüche, wobei Ortungssignalgeber und Ortungssignalempfänger darüber hinaus derart zusammenwirken, daß durch dieses Zusammenwirken die Proportionen und / oder Volumina und / oder Massen des Raums und/ oder des Einrichtungsgegenstands identifizierbar ist/sind.

9. Kaitgerätestecker, umfassend ein Ortungssystem gemäß einem der zuvor genannten Ansprüche

10. Einrichtungsgegenstand, umfassend ein Ortungssystem gemäß einem der zuvor genannten Ansprüche

11. Einrichtungsgehenstand nach Anspruch 10, wobei der Einrichtungsgegenstand ein Hausgerät ist.

12. Datenbank, umfassend Daten, die die räumliche Position eines Einrichtungsgegenstands im Gebäude gemäß einem der zuvor genannten Ansprüche mit Hilfe eines Ortungssystems identifiziert und /oder beschickt und / oder aktualisiert.

13. Facility Management System, umfassend ein Ortungssystem gemäß einem der zuvor genannten Ansprüche und / oder eine Datenbank gemäß Anspruch 12.

14. Facility Management System gemäß Anspruch 13, wobei die räumliche Position des Einrichtungsgegenstands im Gebäude gemäß einem der zuvor genannten Ansprüche ortbar ist und dieser Ort in das Facility Management System einordenbar ist.

15. Facility Management System gemäß Anspruch 14, wobei der in das Facility Management System einordenbare Ort des Einrichtungsgegenstands im Gebäude im Facility Management System einer Verwaltungseinheit zuordenbar ist.
